# DEMANDE DE BREVET EUROPEEN

(11) **EP 0 905 057 A1**
(43) Date de publication de la demande: **31.03.1999**
(21) Numéro de dépôt: 98402329.1
(22) Date de dépôt: 22.09.1998
(51) Int. Cl.: B65F 1/14

(54) **Dispositif de transport et/ou de collecte en matière plastique moulée comportant un dispositif d'identification et procédé de fabrication**

(30) Priorité: 22.09.1997 FR 9711760
(71) Demandeur: COMPAGNIE PLASTIC OMNIUM, 69007 Lyon (FR)
(72) Inventeur: Debras, Jean-Jacques, 91400 Saclay (FR); Plissonnier, Bernard, 52200 Peigney (FR)
(74) Mandataire: Leszczynski, André

(57) **Abrégé**

L'invention est relative à un dispositif de transport et/ou de collecte (1) en matière plastique moulée comportant un dispositif d'identification (9) électronique tel qu'un transpondeur, ce dispositif d'identification étant intégré à une paroi (2) du dispositif de transport et/ou de collecte lors du moulage de cette dernière.

Le dispositif d'identification est logé au moins partiellement dans une coquille (10) de protection au contact de laquelle est moulée ladite paroi (2).

## Description

La présente invention concerne un dispositif de transport et/ou de collecte en matière plastique moulée comportant un dispositif d'identification électronique tel qu'un transpondeur, et plus particulièrement mais non exclusivement un conteneur pour la collecte de déchets.

Le dispositif d'identification permet, dans le cas de la collecte des déchets par exemple, d'identifier le conteneur et de facturer l'usager en fonction du poids des déchets collectés.

On a proposé dans le brevet européen 0 495 947 d'intégrer le dispositif d'identification à la collerette du conteneur sous la forme d'un insert autour duquel est moulée par injection la matière plastique constituant ladite paroi.

Toutefois, cette solution n'est envisageable que lorsque le dispositif d'identification ne risque pas d'être endommagé par la température et/ou la pression de la matière plastique dans le moule.

Dans le cas contraire, le brevet 0 495 947 propose de réaliser un renfoncement dans la collerette du conteneur puis d'introduire le dispositif d'identification dans ce renfoncement et de le maintenir en place au moyen d'un couvercle fixé par soudage, collage, vissage ou rivetage.

A la connaissance de la société déposante, il n'existe pas de dispositif d'identification comportant des circuits électroniques usuels capable de résister à la température et à la pression de la matière plastique dans le moule sans risquer d'être endommagé.

C'est donc la solution faisant intervenir un couvercle qui est mise en oeuvre dans la pratique dès que le dispositif d'identification est quelque peu complexe.

Toutefois, cette façon de procéder n'offre pas entière satisfaction, notamment en ce qui concerne la fiabilité de la fixation du couvercle.

On connaît par la demande de brevet allemand DE-A-44 37 808, un procédé pour mettre en place sur un objet moulé par injection un dispositif d'identification constitué d'une antenne et d'un micro-circuit.

Dans un premier temps, on moule la matière plastique sur une coque remplie d'un gel et logeant l'antenne.

Ensuite, le micro-circuit est rapporté sur l'objet, en étant par exemple maintenu par une pièce de fixation ou noyé dans une goutte de colle.

Dans un tel procédé, le dispositif d'identification n'est pas intégré à l'objet lors du moulage de ce dernier car la mise en place du dispositif d'identification nécessite une opération supplémentaire après le moulage de la matière pour fixer le micro-circuit.

La présente invention a pour objet un nouveau dispositif de transport et/ou de collecte en matière plastique moulée tel qu'un conteneur pour la collecte de déchets par exemple, du type comportant un dispositif d'identification électronique intégré lors du moulage à une paroi du dispositif de transport et/ou de collecte, la fiabilité du montage de ce dernier étant accrue par rapport aux dispositifs de transport et/ou de collecte connus sans pour autant que le coût de l'implantation du dispositif d'identification ne devienne excessif.

Le dispositif de transport et/ou de collecte selon l'invention se caractérise par le fait que le dispositif d'identification est logé au moins partiellement dans une coquille de protection au contact de laquelle est moulée une paroi du dispositif de transport et/ou de collecte.

Grâce à l'invention, le dispositif d'identification est intégré en totalité au dispositif de transport et/ou de collecte lors du moulage, donc sans qu'il soit nécessaire de prévoir une étape de montage supplémentaire pour rapporter un élément du dispositif d'identification après le moulage et sans risque de destruction des circuits du dispositif d'identification sensibles à la température et/ou à la pression.

De préférence, le dispositif d'identification est encapsulé en totalité dans ladite coquille de protection.

Dans une réalisation particulière, la coquille de protection se présente sous la forme d'un boîtier en matière plastique.

Ce boîtier peut être réalisé par exemple par assemblage d'un fond et d'un couvercle ou en variante d'un seul tenant, le dispositif d'identification étant alors mis en place à l'intérieur du boîtier soit par une ouverture de ce dernier, laquelle est ensuite refermée, soit en refermant sur le dispositif d'identification deux moitiés de boîtier reliées par une charnière film.

Dans une réalisation particulière, la coquille de protection est entièrement noyée dans ladite paroi.

Dans une variante, la coquille de protection présente une face débouchant à la surface de ladite paroi, de préférence à sa surface extérieure.

Dans une autre variante, la coquille de protection présente deux faces opposées débouchant à la surface de ladite paroi.

Toujours dans une réalisation particulière, la coquille de protection est contenue dans un renflement de ladite paroi.

Dans le cas particulier d'un conteneur pour la collecte des déchets, la coquille de protection peut être intégrée par exemple à la paroi avant de la cuve du conteneur ou dans la collerette permettant la préhension du conteneur par l'organe de levage du véhicule de collecte.

L'invention a encore pour objet un procédé pour fabriquer un dispositif de transport et/ou de collecte, ce procédé étant caractérisé par le fait qu'il comporte les étapes consistant à :
- encapsuler au moins partiellement le dispositif d'identification dans un matériau apte à le protéger durant l'étape de moulage du dispositif de transport et/ou de collecte,
- mouler une paroi du dispositif de transport et/ou de collecte au contact du dispositif d'identification ainsi encapsulé.

De préférence, le dispositif d'identification est encapsulé en totalité dans ledit matériau apte à le protéger lors du moulage de ladite paroi.

D'autres caractéristiques et avantages de la présente invention apparaîtront à la lecture de la description détaillée qui va suivre, d'un exemple de réalisation non limitatif de l'invention, et à l'examen du dessin annexé sur lequel :
- la figure 1 est une vue schématique en perspective d'un conteneur pour la collecte de déchets,
- les figures 2 et 3 sont des coupes schématiques d'un dispositif d'identification encapsulé conformément à deux exemples de mise en oeuvre de l'invention,
- les figures 4 à 8 sont des coupes illustrant diverses façons dont le dispositif d'identification encapsulé peut être intégré à la paroi du conteneur.

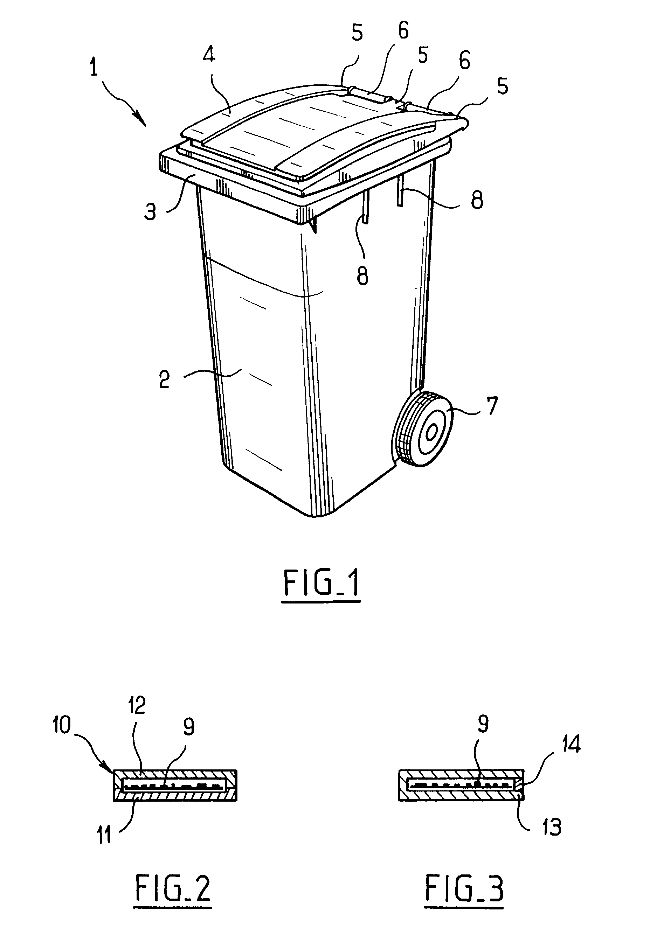

Le conteneur ou bac 1 représenté sur la figure 1 comporte une cuve 2 en matière plastique qui est pourvue à son bord supérieur d'une collerette 3 moulée d'un seul tenant avec la cuve, servant à rigidifier cette dernière et à permettre la préhension du conteneur par l'organe de levage du véhicule de collecte.

Un couvercle 4 est articulé sur la cuve 2 de façon connue en soi au moyen de charnières 5 disposées de part et d'autre de poignées 6.

Des roues 7 sont également prévues et des nervures de rigidification 8 sont réalisées à l'extérieur de la cuve 2 sous la collerette 3.

Le vidage du conteneur 1 s'effectue en le soulevant et en le faisant basculer vers l'avant après avoir introduit sous la collerette 3, du côté opposé aux charnières 5 et aux poignées 6, l'organe de levage du véhicule de collecte.

Un dispositif d'identification électronique tel qu'un transpondeur est incorporé au conteneur et le véhicule de collecte est muni de moyens de lecture/enregistrement appropriés permettant d'échanger des informations avec ce transpondeur.

Le véhicule de collecte peut être agencé pour peser chaque conteneur lors de son vidage afin d'évaluer la quantité de déchets collectés.

La masse totale des déchets collectés pendant une période donnée peut être mémorisée dans le transpondeur afin de facturer l'usager, non plus forfaitairement mais proportionnellement à la quantité de déchets collectés.

Le transpondeur peut s'avérer en outre utile pour gérer les opérations de maintenance du conteneur.

Le transpondeur utilisé est par exemple du type décrit dans le brevet européen 0 412 020, comportant un microprocesseur et au moins une mémoire.

Conformément à l'invention, le transpondeur est logé dans une coquille de protection qui, dans l'exemple de réalisation décrit, est constituée par un boîtier en matière plastique injectée.

On a représenté très schématiquement sur la figure 2 un transpondeur 9 logé dans un boîtier 10 constitué ici par l'assemblage d'un fond 11 et d'un couvercle 12.

En variante, comme représenté sur la figure 3, le boîtier 10 est réalisé d'un seul tenant en matière plastique et comporte une ouverture latérale 13 permettant l'introduction du transpondeur. Cette ouverture 13 est obturée après la mise en place du transpondeur par des moyens d'obturation 14 qui peuvent être constitués par exemple par un rabat relié au corps du boîtier par une charnière film.

Le boîtier 10 à l'intérieur duquel est logé le transpondeur 9 peut être placé en différents endroits du conteneur, par exemple dans la paroi avant de la cuve 2 ou dans la collerette 3, l'important étant qu'il puisse s'établir une liaison, radio-électrique par exemple, entre le transpondeur et les moyens de lecture et/ou d'enregistrement présents sur le véhicule de collecte.

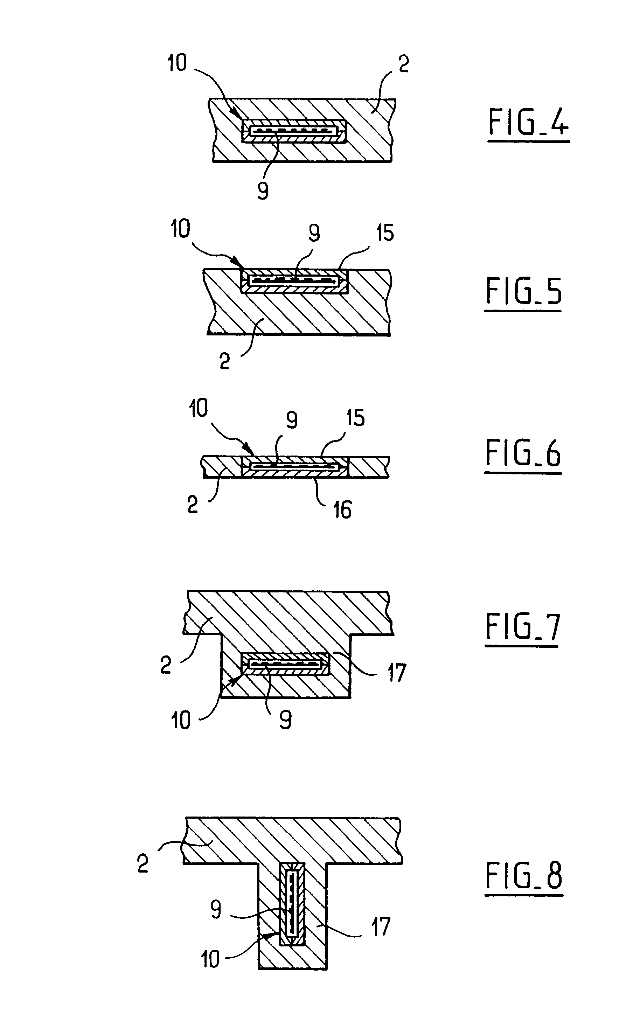

On a représenté sur les figures 4 à 8 différentes façons d'intégrer le boîtier 10 à la paroi du conteneur, non limitatives de l'invention.

Le boîtier 10 peut être, comme on le voit sur la figure 4, noyé entièrement dans l'épaisseur de la paroi du conteneur, par exemple dans l'épaisseur de la paroi avant de la cuve 2.

En variante, comme représenté sur la figure 5, le boîtier 10 n'est pas complètement noyé dans l'épaisseur de la paroi du conteneur mais débouche à sa surface par une face 15.

Ce mode de réalisation permet si on le souhaite d'inscrire des informations sur la face apparente 15 du boîtier 10, ou d'utiliser la couleur du boîtier pour signaler la nature des déchets à collecter, verre ou plastique par exemple.

On peut également, comme illustré par la figure 6, faire en sorte que le boîtier 10 présente deux faces opposées 15 et 16 débouchant à la surface de la paroi du conteneur.

Dans d'autres variantes illustrées sur les figures 7 et 8, le boîtier 10 est noyé dans un renflement 17 intérieur ou extérieur, réalisé d'un seul tenant avec la paroi du conteneur.

D'une façon générale, on choisit l'orientation du boîtier qui convient le mieux à l'échange d'information avec les moyens de lecture/enregistrement du véhicule de collecte.

On peut ainsi, dans une variante non représentée, incliner le boîtier par rapport à la surface si cela laisse une plus grande liberté dans le choix du positionnement des moyens de lecture/enregistrement du véhicule de collecte.

Grâce à l'invention, le transpondeur 9 peut être intégré à une paroi du conteneur lors du moulage de celle-ci même s'il est constitué de composants électroniques fragiles susceptibles d'être endommagés par la température et/ou la pression de la matière plastique dans le moule.

En outre, le transpondeur 9 peut être positionné précisément puisqu'une fois la paroi du conteneur moulée autour du boîtier 10, ce dernier n'est plus susceptible de bouger par rapport à la paroi du conteneur, le transpondeur 9 étant par ailleurs de préférence immobilisé dans le boîtier 10 par tout moyen approprié.

A cet égard il convient de remarquer qu'il est aisé de réaliser dans le boîtier 10 qui présente un faible volume des reliefs permettant d'immobiliser le transpondeur, alors que la réalisation de tels reliefs directement sur la paroi du conteneur, qui est plus volumineuse, serait difficile.

L'immobilisation du transpondeur dans le boîtier 10 peut également s'effectuer au moyen d'un matériau élastomère par exemple, ce qui présente l'avantage d'amortir les chocs.

Le dispositif d'identification s'avère, dans les exemples décrits, impossible à extraire du conteneur sans endommager celui-ci et le maintien du transpondeur dans le conteneur est donc particulièrement fiable.

On ne sort pas du cadre de la présente invention en encapsulant le transpondeur d'une autre manière pour le protéger de la température et/ou de la pression de la matière plastique au moment du moulage, lequel peut s'effectuer par injection, extrusion, soufflage, rotomoulage, thermoformage ou encore par toute autre technique de transformation de matière plastique.

En particulier, on peut encapsuler le transpondeur dans une coquille de protection constituée dans un matériau qui n'est pas nécessairement rigide, cette coquille pouvant en outre présenter une forme quelconque et ne recouvrir que les seuls composants fragiles du transpondeur.

On peut encore protéger le transpondeur, sans sortir du cadre de la présente invention, en surmoulant sur celui-ci une simple peau de protection en matière plastique.

Le matériau constituant la coquille de protection peut bien entendu se ramollir lors du moulage de la paroi du conteneur, l'essentiel étant que la coquille de protection assure une protection suffisante du transpondeur vis-à-vis de la température et/ou de la pression de la matière plastique dans le moule.

L'invention ne s'applique pas seulement à un conteneur pour la collecte de déchets et peut trouver aussi application dans le domaine des dispositifs de transport de marchandises tels que des palettes ou des casiers et bacs de manutention.

## Revendications

1. Dispositif de transport et/ou de collecte en matière plastique moulée comportant un dispositif d'identification électronique (9) tel qu'un transpondeur, ce dispositif d'identification étant intégré à une paroi du dispositif de transport et/ou de collecte lors du moulage de cette dernière, caractérisé par le fait que le dispositif d'identification (9) est logé au moins partiellement dans une coquille de protection (10) au contact de laquelle est moulée ladite paroi (2).

2. Dispositif selon la revendication 1, caractérisé par le fait que ladite coquille de protection se présente sous la forme d'un boîtier (10) en matière plastique.

3. Dispositif selon la revendication 2, caractérisé par le fait que ledit boîtier (10) est réalisé par assemblage d'un fond (11) et d'un couvercle (12).

4. Dispositif selon la revendication 2, caractérisé par le fait que le boîtier (10) est réalisé d'un seul tenant.

5. Dispositif selon l'une quelconque des revendications 1 à 4, caractérisé par le fait que ladite coquille de protection (10) est noyée dans l'épaisseur de ladite paroi.

6. Dispositif selon l'une quelconque des revendications précédentes, caractérisé par le fait que le dispositif d'identification est encapsulé en totalité dans la coquille de protection.

7. Dispositif selon l'une quelconque des revendications 1 à 4, caractérisé par le fait que ladite coquille de protection (10) présente une face (15) débouchant à la surface de ladite paroi, de préférence sa surface extérieure.

8. Dispositif selon l'une quelconque des revendications 1 à 4, caractérisé par le fait que ladite coquille de protection présente deux faces opposées (15,16) débouchant à la surface de ladite paroi.

9. Dispositif selon l'une quelconque des revendications 1 à 4, caractérisé par le fait que ladite coquille de protection est située dans un renflement (17) de ladite paroi.

10. Dispositif selon l'une quelconque des revendications 1 à 9, caractérisé par le fait qu'il constitue un conteneur pour la collecte des déchets.

11. Conteneur selon la revendication 10, caractérisé par le fait que le dispositif d'identification est intégré à la paroi avant de la cuve (2) du conteneur.

12. Conteneur selon la revendication 10, caractérisé par le fait que le dispositif d'identification est intégré à une collerette (3) servant au levage du conteneur par le véhicule de collecte.

13. Procédé pour réaliser un dispositif (1) de transport et/ou de collecte en matière plastique moulée, notamment un conteneur de collecte de déchets agencé pour être vidé par basculement dans un véhicule de collecte, ledit dispositif de transport et/ou de collecte comportant un dispositif d'identification électronique (9) tel qu'un transpondeur, ce procédé étant caractérisé par le fait qu'il comprend les étapes consistant à :
- encapsuler au moins partiellement le dispositif d'identification (9) dans un matériau apte à protéger le transpondeur durant le moulage de la paroi du dispositif de transport et/ou de collecte,
- mouler la paroi dudit dispositif de transport et/ou de collecte au contact du dispositif d'identification ainsi encapsulé.

14. Procédé selon la revendication précédente, caractérisé par le fait que le dispositif d'identification est encapsulé en totalité dans ledit matériau apte à le protéger lors du moulage de ladite paroi.
